# EUROPEAN PATENT APPLICATION

(11) **EP 2 996 265 A2**
(43) Date of publication of application: **16.03.2016**
(21) Application number: 13806987.7
(22) Date of filing: 22.08.2013
(51) Int. Cl.: H04B 10/2513, H04B 10/66

(54) **LIGHT RECEIVING DEVICE AND METHOD, AND LIGHT TRANSCEIVING INTEGRATED MODULE**

(30) Priority: 10.05.2013 CN 201310173544
(71) Applicant: ZTE Corporation, Shenzhen, Guangdong 518057 (CN)
(72) Inventor: KUANG, Guohua, Shenzhen Guangdong 518057 (CN); FU, Zhiming, Shenzhen Guangdong 518057 (CN); CHEN, Lei, Shenzhen Guangdong 518057 (CN); WANG, Ying, Shenzhen Guangdong 518057 (CN); LI, Kun, Shenzhen Guangdong 518057 (CN)
(74) Representative: Tischner, Oliver
(86) International application number: PCT/CN2013/082118
(87) International publication number: WO 2013/189422

(57) **Abstract**

Disclosed is an optical receiver device which includes a photoelectric conversion module and a dispersion compensation module, wherein the photoelectric conversion module is configured to receive an optical signal and to convert the optical signal into an electrical signal; and the dispersion compensation module is configured to perform dispersion compensation on the electrical signal and to output the compensated electrical signal. At the same time, the disclosure also provides an optical receiver method and an optical transceiving integrated module. The optical receiver device of the disclosure is supplemented with an electronic dispersion compensation function, which can reduce the channel dispersion cost of an optical signal, and prolong the transmission distance of a subsequent modulated optical signal in an optical fibre.

## Description

### TECHNICAL FIELD

The disclosure relates to the field of optical communications, and in particular to an optical receiver device, an optical receiver method and an optical transceiving integrated module.

### BACKGROUND

With the fast development of fibre communication technology and due to the requirement of low cost, for a core network, a metropolitan area network and an access network, it is common to compose a network using fibres only; therefore, how to further reduce operation cost is a problem to be solved for operators.

In fibre communication, due to the chirp effect of a conventional Direct Modulation Laser (DML), degradation is caused to the dispersion effect of optical signals in fibre transmission; when a signal received by a DML is transmitted through a fibre after directly modulated, dispersion will seriously shorten the transmission distance of the directly modulated optical signal in a fibre in a long-wavelength or high-speed transmission mode according to the dispersion limited theory; for example, a C-band DML transmits signals within 10km at 10Gbps, an Externally Modulated Laser (EML) generally transmits 10Gbps-signals approximately up to 40km. A conventional optical transceiving integrated module cannot perform dispersion compensation for received optical signals, resulting in a limited transmission distance for subsequently directly modulated optical signals.

### SUMMARY

The main technical problem to be solved by the embodiments of the disclosure is to provide an optical receiver device, an optical receiver method and an optical transceiving integrated module, which can perform dispersion compensation on an optical signal and prolong the transmission distance of a subsequent optical signal in an optical fibre.

In order to solve the above technical problem, an embodiment of the disclosure provides an optical receiver device, which includes a photoelectric conversion module and a dispersion compensation module, wherein
the photoelectric conversion module is configured to receive an optical signal and to convert the optical signal into an electrical signal; and
the dispersion compensation module is configured to perform dispersion compensation on the electrical signal and to output the compensated electrical signal.

In the above scheme, the dispersion compensation module may include an electronic dispersion compensation sub-module and a data recovery sub-module, in which,
the electronic dispersion compensation sub-module is configured to perform dispersion compensation on the electrical signal; and
the data recovery sub-module is configured to perform phase retrieval and data shaping on the compensated electrical signal, and to output the compensated shaped electrical signal.

In the above scheme, the optical receiver device further may include a processing module, wherein the processing module is configured to amplify the electrical signal according to a dispersion compensation requirement and to send the amplified electrical signal to the dispersion compensation module.

In the above scheme, the optical receiver device may further include a signal detection module, wherein the signal detection module is configured to detect the amplified electrical signal output by the processing module and to determine whether the amplified electrical signal is lost.

In the above scheme, the processing module may be a linear amplification module; and
the linear amplification module is configured to linearly amplify, according to a voltage requirement of the dispersion compensation, the voltage signal converted by the photoelectric conversion module.

In the above scheme, the processing module may be a linear amplification module and the signal detection module is a signal amplitude decision device, in which,
the linear amplification module may be configured to linearly amplify, according to a voltage requirement of dispersion compensation, the voltage signal converted by the photoelectric conversion module; and
the signal amplitude decision device may be configured to: detect a voltage value of the amplified electrical signal output by the linear amplification module, compare the voltage value with a preset threshold, decide that the amplified electrical signal is lost when the voltage value is lower than the preset threshold, otherwise decide that the amplified electrical signal is not lost when the voltage value is not lower than the preset threshold.

In the above scheme, the photoelectric conversion module may be configured to receive a continuous-mode optical signal or a burst-mode optical signal, and to convert the continuous-mode optical signal or the burst-mode optical signal into a voltage signal.

In the above scheme, the electronic dispersion compensation sub-module may be a feed-forward equalizer or a decision feedback equalizer, wherein the feed-forward equalizer or the decision feedback equalizer is configured to perform adaptive dispersion compensation on the electrical signal.

In the above scheme, the photoelectric conversion module may be configured to receive a burst-mode optical signal and convert the burst-mode optical signal into a voltage signal; in which
the dispersion sub-module is a burst-mode feed-forward equalizer or a bust-mode feedback equalizer; the data recovery sub-module is a fast clock recovery sub-module;
the burst-mode feed-forward equalizer or the bust-mode feedback equalizer is configured to perform adaptive dispersion compensation on the voltage signal;
the fast clock recovery sub-module is configured to perform phase retrieval and data shaping on the compensated voltage signal, and to output the compensated shaped electrical signal.

An embodiment of the disclosure also provides an optical transceiving integrated module, which includes the optical receiver device described above.

An embodiment of the disclosure also provides an optical receiver method, which includes:
receiving an optical signal and converting the optical signal into an electrical signal; and
performing dispersion compensation on the electrical signal and outputting the compensated electrical signal.

In the above scheme, performing dispersion compensation on the electrical signal may include:
performing dispersion compensation on the electrical signal; and
performing phase retrieval and data shaping on the compensated electrical signal, and outputting the compensated shaped electrical signal;

In the above scheme, before performing dispersion compensation on the electrical signal, the method may further include:
amplifying the electrical signal according to a dispersion compensation requirement.
In the above scheme, the method may further include:
   detecting the electrical signal meeting the dispersion compensation requirement and determining whether the electrical signal is lost.

In the above scheme, amplifying the electrical signal according to the dispersion compensation requirement may include:
linearly amplifying an amplitude of the electric signal according to a voltage requirement of the dispersion compensation.

In the scheme above, detecting the electrical signal meeting the dispersion compensation requirement and determining whether the electrical signal is lost may include:
detecting a voltage value of the electrical signal meeting the dispersion compensation requirement, comparing the voltage value with a preset threshold, deciding that the electrical signal is lost when the voltage value is lower than the preset threshold, otherwise deciding that the electrical signal is not lost when the voltage value is not lower than the preset threshold.

In the scheme above, receiving an optical signal and converting the optical signal into an electrical signal may include:
receiving a continuous-mode optical signal or a burst-mode optical signal, and converting the continuous-mode optical signal or the burst-mode optical signal into a voltage signal.

The embodiments of the disclosure have advantages as follows:
the embodiments of the disclosure provide an optical receiver device, an optical receiver method and an optical transceiving integrated module, which can perform dispersion compensation on a received optical signal and prolong the transmission distance of a subsequent modulated optical signal in an optical fibre. The optical receiver device includes a photoelectric conversion module and a dispersion compensation module, wherein the photoelectric conversion module is configured to receive an optical signal and to convert the optical signal into an electrical signal; and the dispersion compensation module is configured to perform dispersion compensation on the electrical signal and to output the compensated electrical signal. The optical receiver device provided in the embodiment of the disclosure is supplemented with a dispersion compensation module, which can perform dispersion compensation on a converted electrical signal, that is, an electronic dispersion compensation function is added to the optical receiver device. Compared with a conventional optical receiver device, the optical receiver device provided in the embodiment of the disclosure can compensate the degradation of channel dispersion effect of a modulated signal in optical fibre transmission caused by the chirp effect of DML, and prolong the transmission distance of a subsequent direct modulated optical signal in an optical fibre.

### BRIEF DESCRIPTION OF THE DRAWINGS

Fig. 1 shows a structure diagram of a first optical receiver device provided by Embodiment 1 of the disclosure;
Fig. 2 shows a structure diagram of a second optical receiver device provided by Embodiment 1 of the disclosure;
Fig. 3 shows a structure diagram of a third optical receiver device provided by Embodiment 1 of the disclosure;
Fig. 4 shows a structure diagram of a fourth optical receiver device provided by Embodiment 1 of the disclosure;
Fig. 5 shows a structure diagram of a first optical receiver device provided by Embodiment 2 of the disclosure;
Fig. 6 shows a structure diagram of a second optical receiver device provided by Embodiment 2 of the disclosure;
Fig. 7 shows a structure diagram of a third optical receiver device provided by Embodiment 2 of the disclosure;
Fig. 8 shows a structure diagram of a first optical receiver device provided by Embodiment 3 of the disclosure;
Fig. 9 shows a structure diagram of a second optical receiver device provided by Embodiment 3 of the disclosure;
Fig. 10 shows a structure diagram of a third optical receiver device provided by Embodiment 3 of the disclosure;
Fig. 11 shows a structure diagram of a fourth optical receiver device provided by Embodiment 3 of the disclosure;
Fig. 12 shows a structure diagram of an optical network unit (ONU) transceiving device provided by Embodiment 4 of the disclosure;
Fig. 13 shows a structure diagram of another ONU transceiving device provided by Embodiment 4 of the disclosure;
Fig. 14 shows an implementation flowchart of an optical receiver method provided by Embodiment 5 of the disclosure; and
Fig. 15 shows an implementation flowchart of another optical receiver method provided by Embodiment 5 of the disclosure.

### DETAILED DESCRIPTION

The embodiments of the disclosure are described below in further detail through specific implementations in conjunction with accompanying drawings.

### Embodiment 1

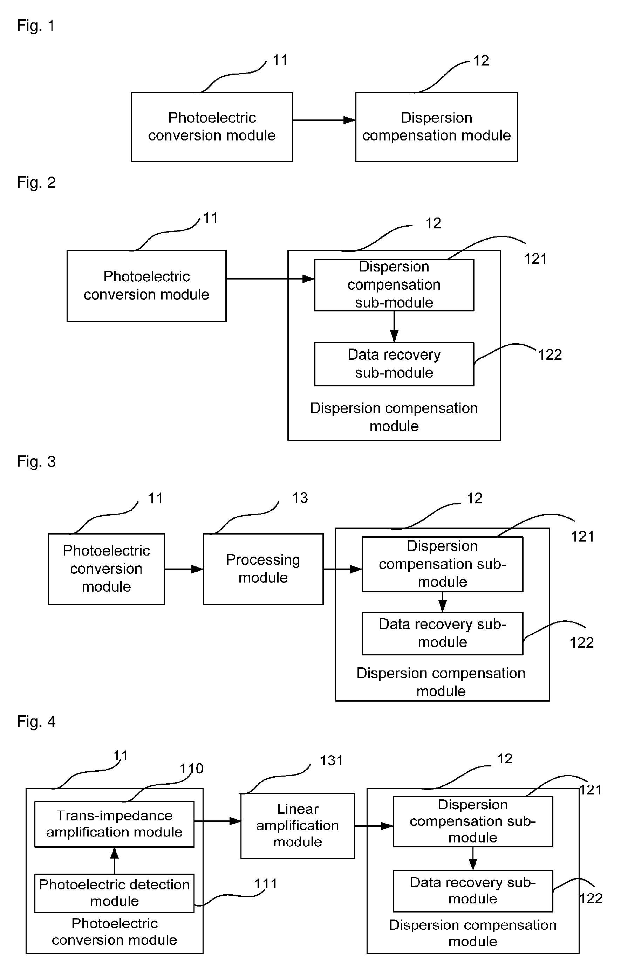

As shown in Fig. 1, this embodiment provides an optical receiver device, including a photoelectric conversion module 11 and a dispersion compensation module 12, wherein the photoelectric conversion module 11 is configured to receive an optical signal and to convert the optical signal into an electrical signal; and the dispersion compensation module 12 is configured to perform dispersion compensation on the electrical signal and to output the compensated electrical signal.

In actual applications, the photoelectric conversion module 11 can be realized by a photoelectric converter; the dispersion compensation module 12 can be realized by a compensator. Both photoelectric converter and compensator can be realized by a light transceiver.

The optical receiver device in this embodiment has a dispersion compensation function, which can reduce the channel chromatic dispersion cost of an optical signal, and prolong the transmission distance of the signal. In addition, the dispersion compensation module in this embodiment can replace a Limiting Amplifier (LA) in a conventional optical receiver device, enabling the optical receiver device to have a dispersion compensation function, and enabling cost reduction. The photoelectric conversion module 11 in this embodiment can be configured to receive a continuous-mode optical signal or a burst-mode optical signal, and convert the continuous-mode optical signal or burst-mode optical signal into an electrical signal. The optical receiver device in this embodiment can perform dispersion compensation on the received continuous-mode optical signal or burst-mode optical signal.

As shown in Fig. 2, the dispersion compensation module 12 in this embodiment might include an electronic dispersion compensation sub-module 121 and a data recovery sub-module 122, in which,
the electronic dispersion compensation sub-module 121 is configured to perform dispersion compensation on the electrical signal; and
the data recovery sub-module 122 is configured to perform phase retrieval and data shaping on the compensated electrical signal, and to output the compensated shaped electrical signal.

In actual applications, both electronic dispersion compensation sub-module 121 and data recovery sub-module 122 can be realized by a Central Processing Unit (CPU), or a Digital Signal Processing (DSP) unit, or a Field-Programmable Gate Array (FPGA) and the like; all the CPU, DSP or FPGA can be embedded into a light transceiver.

In Fig. 2, the photoelectric conversion module 11 converts a received optical signal into an electrical signal and then transmits it to the dispersion compensation module 12, specifically to the electronic dispersion compensation sub-module 121; then, the electronic dispersion compensation sub-module 121 performs dispersion compensation on the received electrical signal, and transmits the compensated electrical signal to the data recovery sub-module 122; then, the data recovery sub-module 122 performs phase retrieval and data shaping on the compensated electrical signal, and outputs the compensated shaped electrical signal. In this embodiment, the electronic dispersion compensation sub-module 121 can conduct dispersion compensation through a single or multiple tapped-delay-line feed-forward equalizer(s) or decision feedback equalizer(s). The feed-forward equalizer or the decision feedback equalizer performs adaptive dispersion compensation on the electrical signal.

In order to better perform dispersion compensation on an electrical signal, it is needed to process the electrical signal before performing the dispersion compensation, so that the electrical signal meets the signal requirement of dispersion compensation. As shown in Fig. 3, the optical receiver device in this embodiment further includes a processing module 13, which is configured to process the electrical signal according to the dispersion compensation requirement before the electronic dispersion compensation sub-module 121 performs dispersion compensation on the electrical signal, and to send the processed electrical signal to the dispersion compensation module 12, specifically, to the electronic dispersion compensation sub-module 121.

Here, the processing module 13 processing the electrical signal according to the dispersion compensation requirement also can be understood as that: the processing module 13 processes the electrical signal so that the processed electrical signal can meet the requirement of dispersion compensation.

In this embodiment, when the photoelectrical conversion module 11 converts the optical signal into an electrical signal, the processing module 13 is a linear amplification module 131, which is configured to linearly amplify the voltage signal so that the signal meets the requirement of voltage range needed by dispersion compensation. In this embodiment the linear amplification module 131 also can be set in the photoelectrical conversion module 11, of course, the specific location can be decided as actually needed.

In this embodiment, the processing module 13 can be realized by an amplifier.

In the optical receiver device shown in Fig. 4, the photoelectric conversion module 11 might include a photoelectric detection module 110 and a trans-impedance amplification module 111, in which, the photoelectric detection module 110 is configured to process a received optical signal and to convert it into a current signal, and the trans-impedance amplification module 111 is configured to perform trans-impedance conversion on the current signal to obtain a voltage signal; before performing dispersion compensation on the voltage signal, the linear amplification module 131 linearly amplifies the voltage signal so that the voltage signal meets the requirement of voltage range needed by dispersion compensation; the dispersion compensation module 12, specifically the electronic dispersion compensation sub-module 121 (for example, a feed-forward equalizer), performs dispersion compensation on the voltage signal meeting the requirement of voltage input range needed by dispersion compensation; the data recovery sub-module 122 performs phase retrieval and data shaping on the compensated voltage signal and finally outputs the compensated shaped signal. In this embodiment, the photoelectric detection module 110 might be a PIN photoelectric detection diode, or an Avalanche Photo Diode (APD); when the optical signal received by the photoelectric conversion module 11 is a burst-mode optical signal, the trans-impedance amplification module 111 in this embodiment might be a burst-mode trans-impedance amplifier; the data recovery sub-module 122 in this embodiment might be a fast data recovery sub-module, for adapting to process a burst-mode optical signal.

Here, the linear amplification module 131 configured to linearly amplify the voltage signal to enable the amplified signal to meet the requirement of voltage range needed by dispersion compensation also can be described as that:
the linear amplification module 131 linearly amplifies the voltage signal according to the voltage requirement of dispersion compensation.

### Embodiment 2

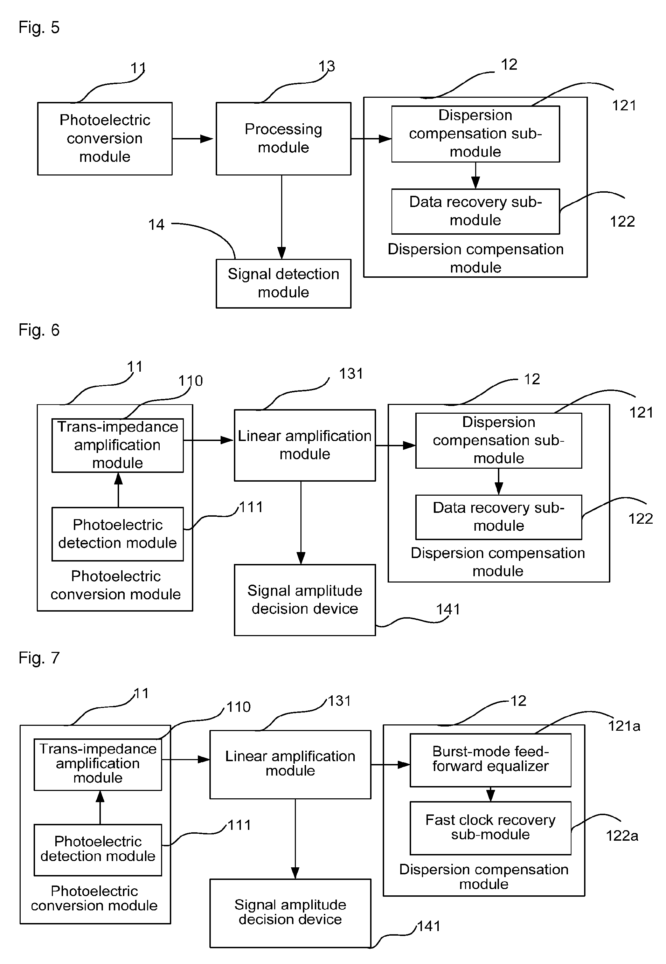

In order to facilitate a subsequent system of the optical receiver device provided by the embodiment of the disclosure to learn whether the signal received by the optical receiver device is lost, the optical receiver device in this embodiment further includes a signal detection module; as shown in Fig. 5, the optical receiver device in this embodiment includes a photoelectric conversion module 11, a dispersion compensation module 12, a processing module 13 and a signal detection module 14, wherein the function and structure of the photoelectric conversion module 11 and the dispersion compensation module 12 can refer to the description in Embodiment 1; the signal detection module 14 in this embodiment is configured to detect the electrical signal output by the processing module 13, and to determine whether the signal received by the optical receiver device is lost.

As shown in Fig. 6, when the photoelectric conversion module 11 in this embodiment converts the received optical signal into a voltage signal, the processing module 13 is a linear amplification module 131, and the signal detection module 14 is a signal amplitude decision device 141; the photoelectric conversion module 11 in this embodiment might include a photoelectric detection module 110 and a trans-impedance amplification module 111, wherein the photoelectric conversion module 11, specifically the photoelectric detection module 110, converts the received optical signal into a current signal, and the trans-impedance amplification module 111 converts the current signal into a voltage signal by trans-impedance conversion; the processing module 13, specifically the linear amplification module 131, linearly amplifies the voltage signal before performing dispersion compensation on the voltage signal, so that the voltage signal meets the requirement of voltage range needed by dispersion compensation; the signal detection module 14, specifically the signal amplitude decision device 141, is configured to detect the voltage value of the electrical signal output by the processing module 13, specifically the linear amplification module 131, and compare the voltage value with a preset threshold, decide that the signal received by the photoelectrical conversion module 11 is lost if the voltage value is lower than the preset threshold, and decide that the optical signal received is not lost if the voltage value is not lower than the preset threshold, that is, the photoelectric conversion module 11 receives optical signals normally; the signal amplitude decision device can notify the determination result to a subsequent system or module.

Similarly, the photoelectric conversion module 11 in this embodiment can receive a continuous-mode optical signal or a burst-mode optical signal, and converts the continuous-mode optical signal or burst-mode optical signal into a voltage signal. The optical receiver device in this embodiment can perform dispersion compensation on the received continuous-mode optical signal or burst-mode optical signal.

As shown in Fig. 7, when the photoelectric conversion module 11 receives a burst-mode optical signal and converts the burst-mode optical signal into a voltage signal, the dispersion sub-module 121 might be a burst-mode feed-forward equalizer 121 a (or burst-mode feedback equalizer 121 b), the data recovery sub-module 122 is a fast clock recovery sub-module 122a; the burst-mode feed-forward equalizer 121 a (or burst-mode feedback equalizer 121 b) is configured to perform adaptive dispersion compensation on the voltage signal output by the linear amplification module 23; in Fig. 7, the signal detection module 14, specifically the signal amplitude decision device 141, is configured to detect the voltage value of the electrical signal output by the linear amplification module 131, and compare the voltage value with a preset threshold, decide that the burst-mode optical signal received by the photoelectrical conversion module 11 is lost if the voltage value is lower than the preset threshold, and decide that the optical signal received is not lost if the voltage value is not lower than the preset threshold, that is, the photoelectric conversion module 11 receives signals normally; the signal amplitude decision device can notify the determination result to a subsequent system or module. The signal amplitude decision device 141 in this embodiment might be a fast signal amplitude decision device.

In this embodiment, the photoelectric detection module 110 might be a PIN photoelectric detection diode or an APD; when the optical signal received is a burst-mode optical signal, the trans-impedance amplification module 111 in this embodiment might be a burst-mode trans-impedance amplifier.

The optical receiver device in this embodiment has a dispersion compensation function, which compensates the dispersion loss of a received optical signal (including in a burst mode and a continuous mode), reduces channel dispersion cost and prolongs the transmission distance of a subsequent modulated optical signal in an optical fibre, and meanwhile can determine whether the signal received by the device is lost, for the subsequent processing of signal.

### Embodiment 3

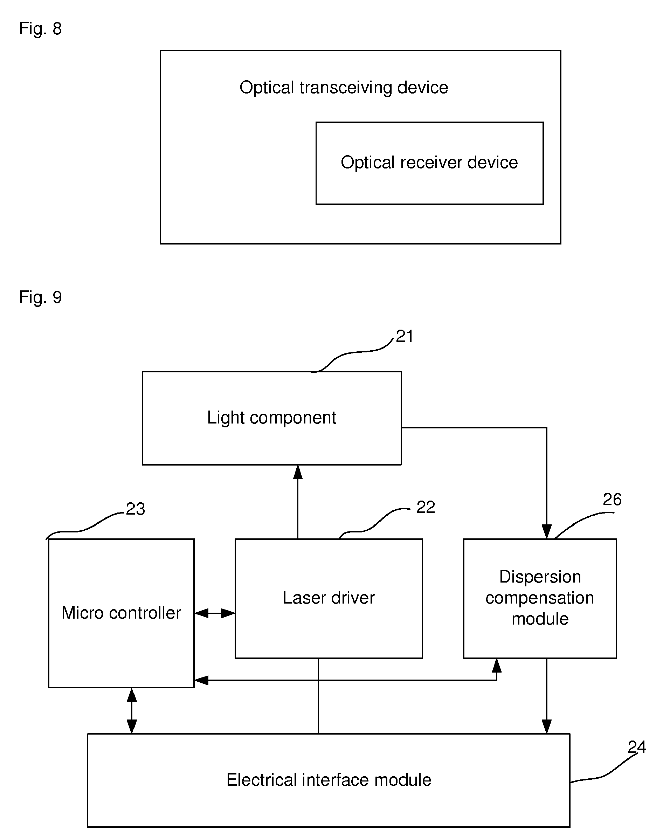

As shown in Fig. 8, this embodiment introduces an optical transceiving device, which includes the optical receiver devices described in Embodiment 1 and Embodiment 2; in this embodiment the optical transceiving device might be an optical transceiving integrated module; the structure of the optical transceiving device provided by this embodiment is described below in further detail.

As shown in Fig. 9, the optical transceiving device in this embodiment includes a light component 21, a dispersion compensation module 26, a laser driver 22, a micro controller 23 and an electrical interface module 24, wherein the light component 21, the dispersion compensation module 26 and the laser driver 22 compose an optical receiver device.

The light component 21 is configured to perform photoelectric conversion, specifically, to convert a received optical signal into a voltage signal, and to convert an electrical data signal input by the electrical interface module 24 into an optical signal meeting requirements.

The laser driver 22 is configured to convert a data signal input by the system via the electrical interface module 24 into a radio-frequency drive current, and then to drive the optical component 21 to convert the radio-frequency drive current into an optical signal meeting system standards.

The micro controller 23 is configured to connect with the laser driver 22 and the electronic dispersion compensation module 12 via control signal lines or Inter-Integrated Circuit (IIC) buses, so as to monitor, collect and process related data, thereby enabling the output signal subjected to the optical-to-electrical conversion or electrical-to-optical conversion of the optical transceiving device provided by the embodiment of the disclosure to be stable, reliable and to meet system requirements.

The dispersion compensation module 26 is configured to perform dispersion compensation on an electrical signal output by the optical component.

The electrical interface module 24 is configured to exchange an electrical signal between the optical receiver device and an external system.

In this embodiment the optical component 21 includes the photoelectric conversion module 11 referred in Embodiment 1 and Embodiment 2; in this embodiment the function and structure of the dispersion compensation module 26 can refer to the introduction in the above embodiments. The optical transceiving device in this embodiment can convert an electrical signal needing transmitting into an optical signal and then transmit the optical signal out through an optical transmission network, or can receive an optical signal from the optical transmission network and convert the received optical signal into an electrical signal, and meanwhile perform dispersion compensation on the electrical signal, thereby reducing the channel dispersion cost of the optical signal and prolonging the transmission distance of the subsequent modulated optical signal.

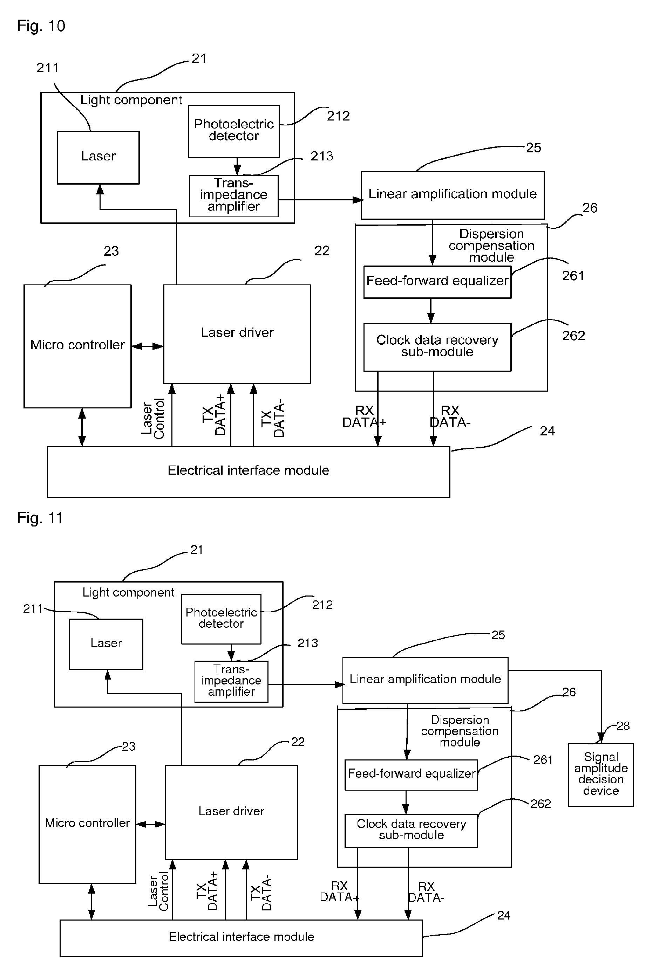

The specific structure of the optical transceiving device provided by this embodiment is described below in further detail, as shown in Fig. 10.

The light component shown in Fig. 10 might include a laser 211, a photoelectric detector 212 and a trans-impedance amplifier 213, wherein the laser 211 converts an electrical data signal to be transmitted into a standard optical signal under the driving of the laser driver; the photoelectric detector 212 converts the received optical signal into an optical current signal and the trans-impedance amplifier 213 converts the optical current signal into a differential analogue voltage signal.

The linear amplification module 25 in Fig. 10 linearly amplifies or narrows the analogue voltage signal, so that the signal meets the requirement of voltage range needed by dispersion compensation.

The dispersion compensation module 26 in Fig. 10 might include a feed-forward equalizer 261 (or feedback equalizer) and a Clock Data Recovery (CDR) sub-module 262; the feed-forward equalizer 261 (or a decision feedback equalizer) in the electronic dispersion compensation module 26 performs adaptive dispersion compensation on a signal output by the linear amplification module 25, and the CDR sub-module 262 performs phase retrieval and data shaping on the compensated signal, and finally outputs the compensated shaped signal to the electrical interface module.

In addition, the micro controller 23 in this embodiment also can be provided with an external IIC bus interface, which is connected with the IIC bus interface of a system board through the electrical interface module 24 of the optical receiver device, so that the system can diagnose and monitor the digital signal of the optical receiver device.

As shown in Fig. 11, on the basis of the optical receiver device shown in Fig. 10, the optical receiver device in this embodiment also might include a signal amplitude decision device 28, which is configured to judge the voltage signal output by the linear amplification module 26; the signal amplitude decision device 28 can preset a decision electrical level and judges the strength of a received signal; if the signal strength is higher than the decision electrical level, it is indicated that the received signal is normal, wherein RX LOS output is of low level or RX SD output is of high level; if the signal strength is lower than the decision electrical level, it is indicated that the received signal is lost, wherein RX LOS output is of high level or RX SD output is of low level; the signal decision is output to the system board through the electrical interface module 24.

### Embodiment 4

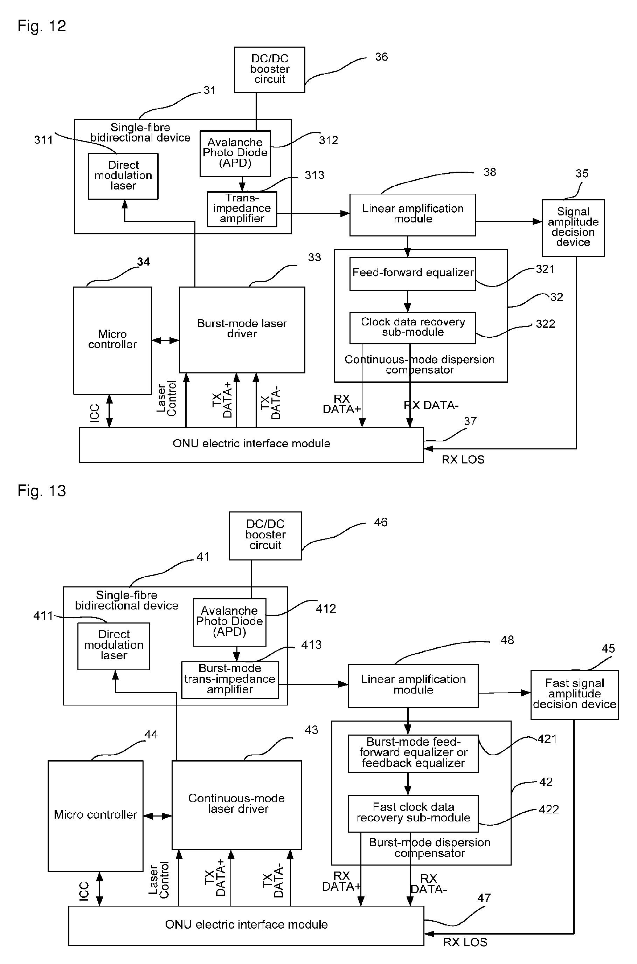

The optical receiver device in this embodiment of the disclosure can be applied to various transceiving devices in optical communications; this embodiment introduces an Optical Network Unit (ONU) transceiving device, which as shown in Fig. 12 includes a single-fibre bidirectional device 31, a continuous-mode electronic dispersion compensator 32, a burst-mode laser driver 33, a micro controller 34, a signal amplitude decision device 35, a DC/DC booster circuit 36, an ONU electrical interface module 37 and a linear amplification module 38. The single-fibre bidirectional device 31 includes a DML laser 311, an Avalanche Photo Diode (APD) 312 and a trans-impedance amplifier 313, wherein the DML laser 311 converts an electrical signal into an optical signal under the driving of the laser driver 33; the APD 312 and the trans-impedance amplifier 313 act together to convert a received optical signal into a voltage signal, the specific process please refer to the introduction of the same part in the above embodiments; the DC/DC booster circuit 36 supplies a bias voltage to the APD in the single-fibre bidirectional device 41; the linear amplification module 38 linearly amplifies the converted voltage signal for dispersion compensation; the continuous-mode electronic dispersion compensator 32 includes a feed-forward equalizer 321 (or a feedback equalizer) and a clock data recovery module, wherein the specific process can refer to that of the optical receiver device in the above embodiments; the signal amplitude decision device 35 can preset a decision electrical level and judges the strength of a received signal; if the signal strength is higher than the decision electrical level, it is indicated that the received signal is normal, wherein RX LOS output is of low level or RX SD output is of high level; if the signal strength is lower than the decision electrical level, it is indicated that the received signal is lost, wherein RX LOS output is of high level or RX SD output is of low level; the signal decision is output to the system board through the electrical interface module 37.

In this embodiment the ONU transceiving device adopts a burst-mode laser driver 33 and a continuous-mode electronic dispersion compensator 32, which not only meets the photometric system indexes of ONU end but also supports an Optical Line Terminal (OLT) transceiving device to use a low-cost DML laser to replace an EML laser. In this embodiment the 10G EPON ONU optical transceiving device employing electronic dispersion compensation supports the 10G EPON OLT to adopt a 1577nm DML to transmit by 20km, which meets the standard requirements and effectively reduces the OLT's cost. The 10G EPON OLT optical module supporting an EML laser transmits a downlink signal by 60km, which effectively prolongs the transmission distance.

This embodiment also provides an OLT transceiving device; as shown in Fig. 13, the OLT transceiving device is similar to Fig. 12 and includes a single-fibre bidirectional device 41, a burst-mode electronic dispersion compensator 42, a continuous-mode laser driver 43, a micro controller 44, a fast signal amplitude decision device 45, a DC/DC booster circuit 46 and an OLT electrical interface module 47. The single-fibre bidirectional device 41 includes a DML laser 411, an APD 412 and a burst-mode trans-impedance amplifier 413, and a linear amplification module 48, wherein the DML laser 411 converts an electrical signal into an optical signal under the driving of the laser driver 43; the APD 412 and the burst-mode trans-impedance amplifier 413 act together to convert a received optical signal into a voltage signal, the specific process please refer to the introduction of the same part in the above embodiments; the linear amplification module 48 linearly amplifies the converted voltage signal for dispersion compensation; the DC/DC booster circuit 46 supplies a bias voltage to the APD in the single-fibre bidirectional device 41; the burst-mode electronic dispersion compensator 42 includes a burst-mode feed-forward equalizer 421 (or a burst-mode feedback equalizer) and a fast clock data recovery module 422 (BM CDR), wherein the two modules act together to implement the dispersion compensation function, the specific process can refer to that of the optical receiver device in the above embodiments; the signal amplitude decision device 45 can preset a decision electrical level and judges the strength of a received signal; if the signal strength is higher than the decision electrical level, it is indicated that the received signal is not lost, wherein RX LOS output is of low level or RX SD output is of high level; if the signal strength is lower than the decision electrical level, it is indicated that the received signal is lost, wherein RX LOS output is of high level or RX SD output is of low level; the signal decision is output to the system board through the electrical interface module 47.

The OLT transceiving device in this embodiment adopts a continuous-mode laser driver and a burst-mode electronic dispersion compensator. It supports the wavelength switch of ONU, the uplink signal can adopt O band, C band or L band; besides the original O band, the ONU optical transceiving integrated module has a wider range of wavelengths to select. The ONU still can use a low-cost DML after wavelength is switched.

### Embodiment 5

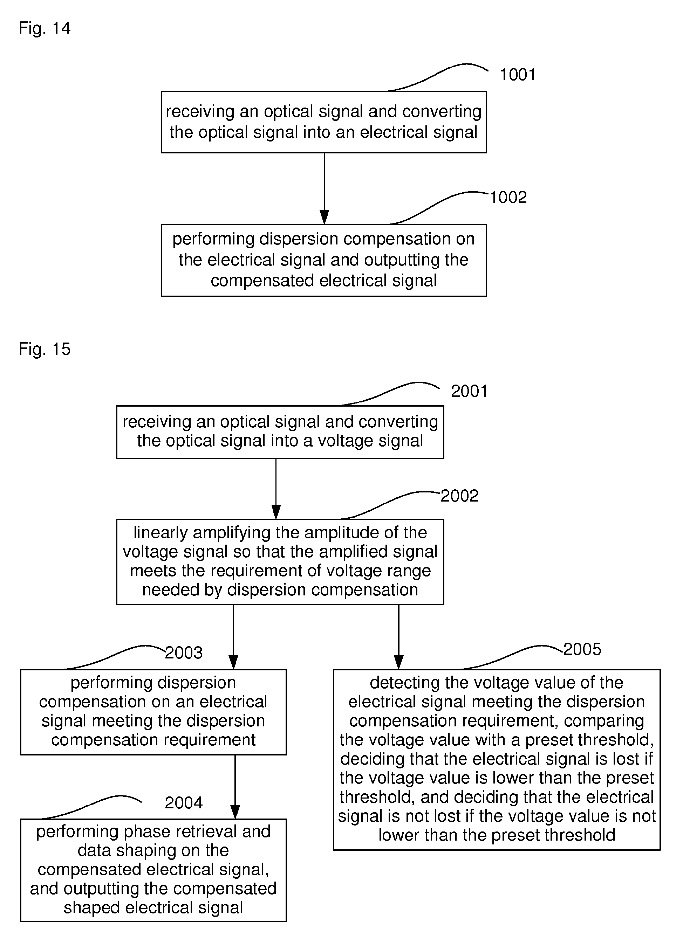

As shown in Fig. 14, this embodiment introduces an optical receiver method, which includes the following steps:
Step 1001: receiving an optical signal and converting the optical signal into an electrical signal; and
Step 1002: performing dispersion compensation on the electrical signal and outputting the compensated electrical signal.

The optical receiver method in this embodiment can perform dispersion compensation on an electrical signal converted from an optical signal when receiving the optical signal, to reduce the channel dispersion cost of the optical signal and prolong the transmission distance.

In Step 1001 performing dispersion compensation on the electrical signal includes:
performing dispersion compensation on the electrical signal; and
performing phase retrieval and data shaping on the compensated electrical signal, and outputting the compensated shaped electrical signal.

To better perform dispersion compensation, before performing dispersion compensation on the electrical signal, the method further includes:
processing the electrical signal according to the dispersion compensation requirement;
that is, processing the electrical signal so that the signal meets the requirement of dispersion compensation.

In order to facilitate the processing of the electrical signal output by the optical receiver device, the method in this embodiment also can include:
detecting the electrical signal meeting the dispersion compensation requirement and determining whether the received signal is lost.

Preferably, when converting the optical signal into a voltage signal, processing the electrical signal so that the signal meets the requirement of dispersion compensation includes:
linearly amplifying the amplitude of the voltage signal according to the voltage requirement of dispersion compensation;
that is, linearly amplifying the amplitude of the voltage signal so that the signal meets the requirement of voltage range needed by dispersion compensation.

Preferably, when linearly amplifying the amplitude of the voltage signal so that the signal meets the requirement of voltage range needed by dispersion compensation, in the method of this embodiment detecting the electrical signal meeting the dispersion compensation requirement and judging whether the received signal is lost include:
detecting the voltage value of the electrical signal meeting the dispersion compensation requirement, comparing the voltage value with a preset threshold, deciding that the electrical signal is lost if the voltage value is lower than the preset threshold.

Preferably, in Step 1001 the process of receiving an optical signal and converting the optical signal into an electrical signal includes:
receiving a continuous-mode optical signal or a burst-mode optical signal, and converting the continuous-mode optical signal or the burst-mode optical signal into a voltage signal.

The specific process of the optical receiver method in this embodiment is described below in detail in conjunction with the above method, as shown in Fig. 15:
Step 2001: receiving an optical signal and converting the optical signal into a voltage signal;
Step 2002: linearly amplifying the amplitude of the voltage signal according to the voltage requirement of the dispersion compensation; and going to Step 2003 and Step 2005;
Step 2003: performing dispersion compensation on an electrical signal meeting the dispersion compensation requirement; then executing Step 2004;
Step 2004: performing phase retrieval and data shaping on the compensated electrical signal, and outputting the compensated shaped electrical signal. Current process is ended;
Step 2005: detecting the voltage value of the electrical signal meeting the dispersion compensation requirement, comparing the voltage value with a preset threshold, deciding that the electrical signal is lost if the voltage value is lower than the preset threshold, and deciding that the electrical signal is not lost (that is, receiving is normal) if the voltage value is not lower than the preset threshold. Current process is ended.

The above content is a detailed description made to the disclosure in conjunction with specific embodiments; it should not be interpreted that the specific embodiments of the disclosure are limited to the description. For those ordinary skilled persons in the field to which the disclosure belongs, simple deductions or substitutes can be made to the disclosure without departing from the idea of the disclosure, and these deductions and substitutes shall fall into the scope of protection of the disclosure.

## Claims

1. An optical receiver device, comprising a photoelectric conversion module and a dispersion compensation module, wherein
the photoelectric conversion module is configured to receive an optical signal and convert the optical signal into an electrical signal; and
the dispersion compensation module is configured to perform dispersion compensation on the electrical signal and output the compensated electrical signal.

2. The optical receiver device according to claim 1, wherein the dispersion compensation module comprises an electronic dispersion compensation sub-module and a data recovery sub-module, in which,
the electronic dispersion compensation sub-module is configured to perform dispersion compensation on the electrical signal; and
the data recovery sub-module is configured to perform phase retrieval and data shaping on the compensated electrical signal, and output the compensated shaped electrical signal.

3. The optical receiver device according to claim 2, further comprising a processing module, wherein the processing module is configured to amplify the electrical signal according to a dispersion compensation requirement and send the amplified electrical signal to the dispersion compensation module.

4. The optical receiver device according to claim 3, further comprising a signal detection module, wherein the signal detection module is configured to detect the amplified electrical signal output by the processing module and to determine whether the amplified electrical signal is lost.

5. The optical receiver device according to claim 3 or 4, wherein the processing module is a linear amplification module, and the linear amplification module is configured to linearly amplify, according to a voltage requirement of the dispersion compensation, the voltage signal converted by the photoelectric conversion module.

6. The optical receiver device according to claim 4, wherein the processing module is a linear amplification module and the signal detection module is a signal amplitude decision device, in which,
the linear amplification module is configured to linearly amplify, according to a voltage requirement of dispersion compensation, the voltage signal converted by the photoelectric conversion module; and
the signal amplitude decision device is configured to detect a voltage value of the amplified electrical signal output by the linear amplification module, compare the voltage value with a preset threshold, decide that the amplified electrical signal is lost when the voltage value is lower than the preset threshold, otherwise decide that the amplified electrical signal is not lost when the voltage value is not lower than the preset threshold.

7. The optical receiver device according to claim 5, wherein the photoelectric conversion module is configured to receive a continuous-mode optical signal or a burst-mode optical signal, and to convert the continuous-mode optical signal or the burst-mode optical signal into a voltage signal.

8. The optical receiver device according to claim 7, wherein the electronic dispersion compensation sub-module is a feed-forward equalizer or a decision feedback equalizer;
the feed-forward equalizer or the decision feedback equalizer is configured to perform adaptive dispersion compensation on the electrical signal.

9. The optical receiver device according to claim 8, wherein the photoelectric conversion module is configured to receive a burst-mode optical signal and convert the burst-mode optical signal into a voltage signal;
the dispersion sub-module is a burst-mode feed-forward equalizer or a bust-mode feedback equalizer; the data recovery sub-module is a fast clock recovery sub-module;
the burst-mode feed-forward equalizer or the bust-mode feedback equalizer is configured to perform adaptive dispersion compensation on the voltage signal;
the fast clock recovery sub-module is configured to perform phase retrieval and data shaping on the compensated voltage signal, and output the compensated shaped electrical signal.

10. An optical transceiving integrated module, comprising the optical receiver device according to any one of claims 1 to 9.

11. An optical receiver method, comprising:
receiving an optical signal and converting the optical signal into an electrical signal; and
performing dispersion compensation on the electrical signal and outputting the compensated electrical signal.

12. The optical receiver method according to claim 11, wherein performing dispersion compensation on the electrical signal comprises:
performing dispersion compensation on the electrical signal; and
performing phase retrieval and data shaping on the compensated electrical signal, and outputting the compensated shaped electrical signal.

13. The optical receiver method according to claim 11 or 12, wherein before performing dispersion compensation on the electrical signal, the method further comprising:
amplifying the electrical signal according to a dispersion compensation requirement.

14. The optical receiver method according to claim 13, further comprising:
detecting the electrical signal meeting the dispersion compensation requirement and determining whether the electrical signal is lost.

15. The optical receiver method according to claim 13, wherein amplifying the electrical signal according to the dispersion compensation requirement comprises:
linearly amplifying an amplitude of the electric signal according to a voltage requirement of the dispersion compensation.

16. The optical receiver method according to claim 14, wherein detecting the electrical signal meeting the dispersion compensation requirement and determining whether the electrical signal is lost comprise:
detecting a voltage value of the electrical signal meeting the dispersion compensation requirement, comparing the voltage value with a preset threshold, deciding that the electrical signal is lost when the voltage value is lower than the preset threshold, otherwise deciding that the electrical signal is not lost when the voltage value is not lower than the preset threshold.

17. The optical receiver method according to claim 11, wherein receiving an optical signal and converting the optical signal into an electrical signal comprise:
receiving a continuous-mode optical signal or a burst-mode optical signal, and converting the continuous-mode optical signal or the burst-mode optical signal into a voltage signal.
